# EUROPÄISCHE PATENTSCHRIFT

(11) **EP 3 028 882 B1**
(45) Veröffentlichungstag und Bekanntmachung des Hinweises auf die Patenterteilung: **19.09.2018**
(21) Anmeldenummer: 15003430.4
(22) Anmeldetag: 02.12.2015
(51) Int. Cl.: B60D 1/02, B60D 1/46, B60D 1/62

(54) **HÖHENVERSTELLBARE ANHÄNGERKUPPLUNG FÜR EIN FAHRZEUG**
VERTICALLY MOVABLE TRAILER COUPLING FOR A VEHICLE
ATTELAGE RÉGLABLE EN HAUTEUR POUR VÉHICULE

(30) Priorität: 03.12.2014 DE 202014009525 U
(43) Veröffentlichungstag der Anmeldung: 08.06.2016
(73) Patentinhaber: Sauermann, Franz, 86558 Hohenwart-Freinhausen (DE)
(72) Erfinder: Sauermann, Franz, 86558 Hohenwart-Freinhausen (DE)
(74) Vertreter: TBK

(56) Entgegenhaltungen:
- EP-A1- 0 823 343
- EP-A1- 2 399 764
- DE-A1- 3 907 763

## Beschreibung

Die Erfindung betrifft eine höhenverstellbare Anhängerkupplung für ein Fahrzeug, insbesondere für einen Ackerschlepper.

Aus der DE 20 2011 110 206 U1 ist eine gattungsgemäße höhenverstellbare Anhängerkupplung für einen Ackerschlepper bekannt. Diese weist einen Träger auf, der zwischen zwei Führungsschienen verschiebbar geführt ist. Der Träger hält mittig einen Kupplungskopf in Form einer Kugel. Dieser Kupplungskopf dient zur Verbindung mit einem Anhänger. Diese Anhängerkupplung hat sich in der Praxis vielfach bewährt.

Eine weitere höhenverstellbare Anhängerkupplung für ein Fahrzeug, insbesondere für einen Ackerschlepper, ist aus der EP 0 823 343 A1 bekannt. Diese Anhängerkupplung weist einen Träger auf, der zwischen Führungsschienen verschiebbar geführt ist. Der Träger ist mit einem Kupplungskopf zur Verbindung eines Anhängers versehen und weist einen Sensor auf zur Erfassung einer Verformung des Trägers aufgrund auftretender Zug- und Schublasten. Der Sensor ist mit einem Anzeigegerät, das in dem Fahrzeug installiert ist, verbunden, um die auftretenden Belastungen anzuzeigen.

Der Erfindung liegt die Aufgabe zugrunde den gattungsgemäßen Stand der Technik derart weiterzuentwickeln, dass die am Träger auftretenden Belastungen akkurat erfasst werden können.

Diese Aufgabe wird durch die Merkmale des Anspruchs 1 gelöst. Insbesondere die Merkmale, die darauf gerichtet sind, dass der Träger Rippen aufweist, die sich vom Kupplungskopf zu den Führungsschienen erstrecken, wobei mindestens ein Sensor zwischen den Rippen oder auf mindestens einer der Rippen angeordnet ist, führen zu einer Erfassung der am Träger auftretenden Belastung mit einer sehr hohen Genauigkeit. Durch die Anbringung des Sensors im Bereich der genannten Rippen kann eine bei hoher Belastung auftretende Verformung deutlich und mit hoher Genauigkeit detektiert werden.

Mit den Unteransprüchen werden vorteilhafte Weiterbildungen beansprucht.

Zur Erzielung einer hohen Stabilität des Trägers weist dieser Rippen auf, die vom Kupplungskopf zu den Führungsschienen verlaufen. Diese Rippen erhöhen die Biegesteifigkeit des Trägers und sorgen auf diese Weise für eine erhebliche Material- und damit Gewichtseinsparung. Um den mindestens einen Sensor optimal gegen äußere Einwirkungen wie Schläge zu schützen, ist er vorzugsweise zwischen den Rippen vorgesehen.

Alternativ kann der mindestens eine Sensor auch auf mindestens einer der Rippen vorgesehen sein, wo die Materialkrümmung beim Auftreten von Zug- oder Schubkräften bedeutend höher ist. Der mindestens eine Sensor ist in diesem Fall wesentlich sensibler und kann auftretende Zug- und Schubkräfte genauer erfassen.

Bei der erfindungsgemäßen höhenverstellbaren Anhängerkupplung verlaufen die Führungsschienen vorzugsweise in vertikaler Richtung, so dass der Träger während der Höhenverstellung keine zusätzliche horizontale Verstellkomponente aufweist. Der Träger trägt mindestens einen Kupplungskopf zur Verbindung eines Anhängers, wobei das konkrete Kupplungsglied unerheblich ist. Insbesondere ist an einen verschiebbaren Kuppelzapfen, einen Piton, einen Haken sowie an eine Kupplungskugel gedacht. Diese Aufzählung ist jedoch nicht abschließend zu verstehen. Insbesondere beim Ziehen schwerer Anhängerlasten ist es für den Fahrer des Fahrzeugs wünschenswert, wenn er Informationen zur Anhänger-, Zug-, und Schubkraft erhält. Insbesondere ist es für den Fahrer wichtig zu erfahren, ob diese Zug- bzw. Schubkraft noch innerhalb des erlaubten Bereichs liegt, um eine Beschädigung der Anhängerkupplung zu vermeiden. Zu diesem Zweck ist am Träger mindestens ein dessen Verformung bei auftretenden Zug- und Schublasten erfassender Sensor vorgesehen. Dieser mindestens eine Sensor erzeugt ein elektrisches Signal, welches von der auftretenden Zug- bzw. Schublast abhängt, da diese den Träger entsprechend verformt. Dieser mindestens eine Sensor steht mit mindestens einem Anzeigegerät in Wirkverbindung, an dem der Fahrer zumindest den aktuellen Zustand der Anhängerkupplung ablesen bzw. überwachen kann. Dabei ist es nicht unbedingt erforderlich, dass das mindestens eine Anzeigegerät die Zug- bzw. Schublast oder einen hierzu proportionalen Wert anzeigt. Es reicht vielmehr völlig aus, wenn das mindestens eine Anzeigegerät die Information anzeigt, ob sich die Anhängerkupplung innerhalb oder außerhalb als zulässig bzw. sicher empfundener Parameter befindet. Im einfachsten Fall kann dieses Anzeigegerät eine rein digitale Information in der Form "zulässig" bzw. "unzulässig" anzeigen.

Für den mindestens einen Sensor hat sich insbesondere ein Dehnungsmessstreifen bewährt, da dieser selbst geringe Verformungen des Trägers zuverlässig in ein auswertbares elektrisches Signal, nämlich eine Änderung des elektrischen Widerstandes umsetzen kann.

Insbesondere zur Kompensation von Temperaturkoeffizienten der Sensoren ist es zweckmäßig, mindestens zwei der Sensoren zu einer Wheatstonebrücke zu schalten. Jegliche Temperaturabhängigkeit der Sensoren wirkt sich in diesem Fall nur auf den Gesamtwiderstand der Wheatstonebrücke aus, nicht jedoch auf deren Teilungsverhältnis, welches als Ausgangssignal abgegriffen werden kann.

Oftmals ist das vom mindestens einen Sensor erzeugte Signal zu schwach, um unmittelbar zu Anzeigezwecken genutzt zu werden. In diesem Fall ist es vorteilhaft, wenn der mindestens eine Sensor mit mindestens einem Verstärker in Wirkverbindung steht. Dieser verstärkt das Sensorsignal so weit, dass es verarbeitbar ist. Insbesondere bei der Anwendung einer Wheatstonebrücke wird als Verstärker ein Instrumentenverstärker eingesetzt, der die Spannungsdifferenz der Wheatstonebrücke mit hoher Nullpunktgenauigkeit und gleichzeitig belastungsarm verstärkt.

Sollen nur digitale Informationen zum Kupplungszustand angezeigt werden, so ist es zweckmäßig, dem mindestens einen Sensor mindestens eine Auswerteschaltung nachzuordnen. Diese gibt nur bei vorgegebenen Betriebszuständen, vorzugsweise bei Betriebszuständen außerhalb der Spezifikation, ein entsprechendes Signal ab. Dieses Signal kann im mindestens einen Anzeigegerät zur Ausgabe einer Warnung genutzt werden. Als Auswerteschaltung hat sich dabei ein Fensterkomparator bewährt, welcher einen mittleren Bereich zulässiger Kräfte von äußeren Bereichen unzulässiger Kräfte unterscheidet und im letzteren Fall ein entsprechendes Signal ausgibt.

Oftmals ist es relativ schwierig, den mindestens einen Sensor leitungsmäßig mit dem mindestens einen Anzeigegerät zu verbinden. Insbesondere bei höhenverstellbaren Anhängerkupplungen passiert es immer wieder, dass derartige Leitungen während der Handhabung der Anhängerkupplung, insbesondere bei der Höhenverstellung beschädigt oder gar abgerissen werden. Zur Vermeidung dieser Probleme ist es günstig, wenn der mindestens eine Sensor und/oder der mindestens eine Verstärker mit mindestens einem Radiowellensender in Wirkverbindung steht. Dieser erlaubt eine drahtlose Datenübermittlung zum mindestens einen Anzeigegerät, so dass keinerlei Kabel zum mindestens einen Sensor geführt werden. Für die Energieversorgung des mindestens einen Sensors kann beispielsweise eine lokale Batterie eingesetzt werden. Alternativ ist auch daran gedacht, statt des Radiowellensenders einen Radiowellendämpfer einzusetzen. In diesem Fall ist ein Radiowellensender fahrzeugfest vorgesehen, der den mindestens einen Sensor mit Energie versorgt. Die Übertragung der Daten vom mindestens einen Sensor zum Radiowellensender erfolgt dann durch Dämpfen des Senderschwingkreises.

Um das mindestens eine Anzeigegerät leicht beobachten zu können, ist es vorteilhaft nahe dem Fahrersitz angeordnet.

Der Erfindungsgegenstand wird beispielhaft anhand der Zeichnung erläutert, ohne den Schutzumfang zu beschränken.

Es zeigt:
- Figur 1: eine räumliche Darstellung einer ersten Ausführungsform einer höhenverstellbaren Anhängerkupplung,
- Figur 2: eine räumliche Schnittdarstellung einer zweiten Ausführungsform einer höhenverstellbaren Anhängerkupplung,
- Figur 3: eine räumliche Darstellung einer dritten Ausführungsform einer höhenverstellbaren Anhängerkupplung und
- Figur 4: einen Prinzipschaltplan.

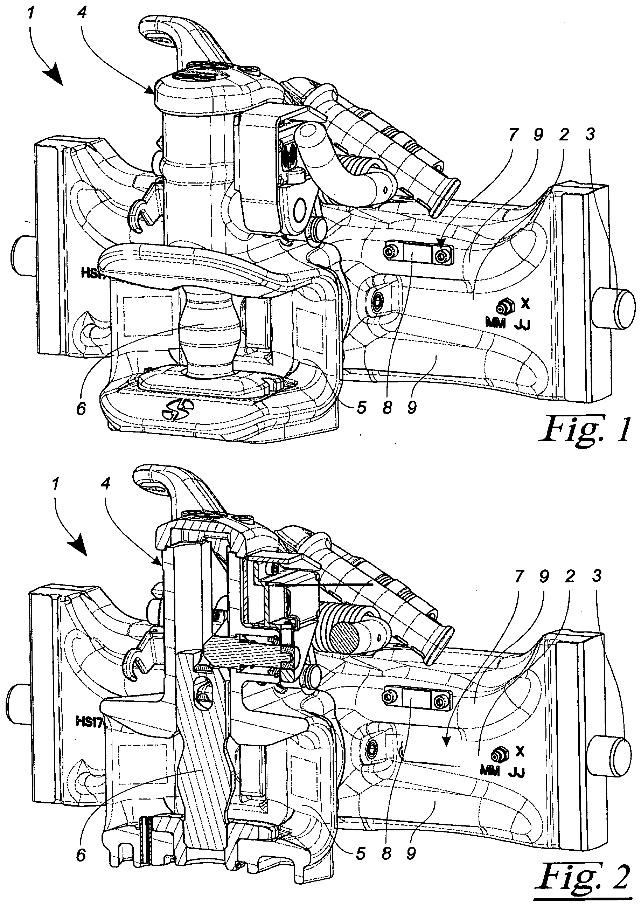

Die Figur 1 zeigt eine höhenverstellbare Anhängerkupplung 1 in räumlicher Darstellung. Die Anhängerkupplung 1 weist einen Träger 2 auf, der zwischen zwei vertikalen, nicht dargestellten Führungsschienen verschiebbar geführt ist. Im Träger 2 sind Sicherungsbolzen 3 vorgesehen, welche in die nicht dargestellten Führungsschienen eindringen und den Träger 2 in der gewählten Höhe festlegen. Zu diesem Zweck weisen die Führungsschienen entsprechende Ausnehmungen auf, die an die Form der Sicherungsbolzen 3 angepasst sind.

Am Träger 2 ist mittig ein Kupplungskopf 4 vorgesehen, der ein Kupplungsmaul 5 aufweist. In diesem Kupplungsmaul 5 ist ein Kupplungsglied 6 vorgesehen, welches lediglich beispielhaft als längsverschiebbarer Kupplungsbolzen dargestellt ist. Daneben sind auch andere Kupplungsglieder wie beispielsweise eine Kugel, eine Piton oder ein Haken vorstellbar. Diese Aufzählung ist allerdings nicht abschließend zu verstehen.

Um die auf das Kupplungsglied 6 einwirkende Zug- oder Schubkraft überwachen zu können, ist am Träger 2 ein Sensor 7 vorgesehen. Dieser Sensor 7 ist insbesondere von einem Dehnungsmessstreifen 8 gebildet, der fest mit dem Träger 2 verbunden ist. Der Träger 2 weist zur mechanischen Versteifung Rippen 9 auf, welche vom Kupplungsmaul 5 zu den nicht dargestellten Führungsschienen verlaufen. Zur Erzielung einer hohen Detektivität des Sensors 7 ist dieser auf der Rippe 9 außenseitig angebracht. Dieser Bereich wird relativ stark durch angreifende Zug- oder Schubkräfte gekrümmt, so dass der Sensor 7 hier ein recht starkes Signal abgibt. Insbesondere ändert der Dehnungsmessstreifen in Abhängigkeit der auftretenden Zug- oder Schubspannung seinen elektrischen Widerstand.

Bei der Ausführungsform der Schnittdarstellung gemäß Figur 2 ist der Sensor 7 zwischen den Rippen 9 vorgesehen. In dieser Lage ist die Krümmung des Trägers 2 zwar relativ schwach, der Sensor 7 ist jedoch optimal vor äußeren Einflüssen geschützt.

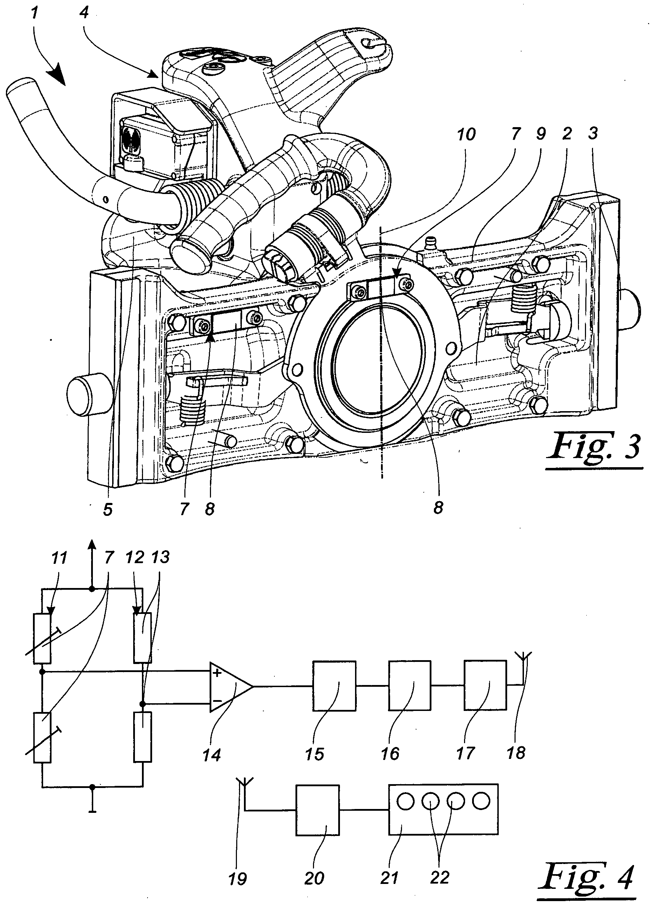

Die Figur 3 zeigt eine weitere alternative Ausführungsform von der Rückseite, bei der der Sensor auf der Rückseite des Trägers 2 angeordnet ist. In diesem Fall wird der Sensor 7 ebenfalls sehr gut vor äußeren Einflüssen geschützt. Zusätzlich ergibt sich eine hohe Detektivität des Sensors 7. Einer der Sensoren 7 ist dabei im Bereich einer vertikalen Mittellinie 10 des Trägers vorgesehen, in der der Träger 2 relativ stark gekrümmt wird. Die Fläche, auf der der Sensor 7 montiert ist, ist in der Figur 3 nicht dargestellt.

Die Figur 4 zeigt einen Prinzipschaltplan für den Sensor 7. Dabei sind zwei der Sensoren 7 zur Bildung eines ersten Spannungsteilers 11 in Serie geschaltet. Parallel zu diesem ersten Spannungsteiler 11 ist ein zweiter Spannungsteiler 12 aus Widerständen 13 gebildet. Die jeweiligen Teilungspunkte beider Spannungsteiler 11, 12 werden abgegriffen und einem Instrumentenverstärker 14 zugeführt. Dieser Instrumentenverstärker hat hochohmige Eingänge, um die Spannungsteiler 11, 12 möglichst nicht zu belasten und verstärkt das Differenzsignal beider Eingänge bei hoher Nullpunktstabilität.

Der Instrumentenverstärker 14 ist mit einer Auswerteschaltung 15 verbunden, die im Wesentlichen von einem Fensterkomparator gebildet ist. Diese Auswerteschaltung 15 liefert ein aktives Signal an ihrem Ausgang, wenn das vom Instrumentenverstärker 14 abgegebene Signal einen oberen Grenzwert überschreitet oder unteren Grenzwert unterschreitet. Befindet sich das Signal des Instrumentenverstärkers 14 dagegen zwischen dem unteren und dem oberen Grenzwert, bleibt die Auswerteschaltung 15 inaktiv. Das Ausgangssignal der Auswerteschaltung 15 wird in einem weiteren Verstärker 16 verstärkt und einem Radiowellensender 17 zur Modulation eines Radiosignals zugeführt. Dieser überträgt das modulierte Radiosignal über eine Antenne 18 zu einer Empfangsantenne 19.

Die Empfangsantenne 19 befindet sich dabei im Bereich eines Sitzes für den Fahrer des Fahrzeugs, vorzugsweise im Bereich der Instrumententafel. Das Signal der Empfangsantenne 19 wird über einen Demodulator 20 decodiert und einem Anzeigegerät 21 zugeführt. Dieses Anzeigegerät 21 weist mehrere Leuchtfelder 22 auf, die den Betriebszustand der Anhängerkupplung 1 anzeigen. Auf diese Weise kann der Fahrer des Fahrzeugs, insbesondere eines Ackerschleppers, leicht sehen, ob sich die Anhängerkupplung 1 innerhalb oder außerhalb der zulässigen Betriebsparameter befindet.

### Bezugszeichenliste

- 1: Anhängerkupplung
- 2: Träger
- 3: Sicherungsbolzen
- 4: Kupplungskopf
- 5: Kupplungsmaul
- 6: Kupplungsglied
- 7: Sensor
- 8: Dehnungsmessstreifen
- 9: Rippe
- 10: Mittellinie
- 11: erster Spannungsteiler
- 12: zweiter Spannungsteiler
- 13: Widerstand
- 14: Instrumentenverstärker
- 15: Auswerteschaltung
- 16: Verstärker
- 17: Radiowellensender
- 18: Antenne
- 19: Empfangsantenne
- 20: Demodulator
- 21: Anzeigegerät
- 22: Leuchtfeld

## Patentansprüche

1. Höhenverstellbare Anhängerkupplung für ein Fahrzeug, insbesondere für einen Ackerschlepper, wobei die Anhängerkupplung (1) einen Träger (2) aufweist, der zwischen Führungsschienen verschiebbar geführt ist, und der Träger (2) mindestens einen Kupplungskopf (4) zur Verbindung eines Anhängers trägt, wobei am Träger (2) mindestens ein dessen Verformung bei auftretenden Zug- und Schublasten erfassender Sensor (7) vorgesehen ist, der mit mindestens einem Anzeigegerät (21) in Wirkverbindung steht,
**dadurch gekennzeichnet, dass**
der Träger (2) Rippen (9) aufweist, die sich vom Kupplungskopf (4) zu den Führungsschienen erstrecken, und
der mindestens eine Sensor (7) zwischen den Rippen (9) oder auf mindestens einer der Rippen (9) angeordnet ist.

2. Höhenverstellbare Anhängerkupplung nach Anspruch 1, **dadurch gekennzeichnet, dass** der mindestens eine Sensor (7) ein Dehnungsmessstreifen (8) ist.

3. Höhenverstellbare Anhängerkupplung nach Anspruch 1 oder 2, **dadurch gekennzeichnet, dass** mindestens zwei der Sensoren (7) zu einer Wheatstonebrücke geschaltet sind.

4. Höhenverstellbare Anhängerkupplung nach mindestens einem der Ansprüche 1 bis 3, **dadurch gekennzeichnet, dass** der mindestens eine Sensor (7) mit mindestens einem Verstärker (14, 16) in Wirkverbindung steht.

5. Höhenverstellbare Anhängerkupplung nach mindestens einem der Ansprüche 1 bis 4, **dadurch gekennzeichnet, dass** dem mindestens einen Sensor (7) mindestens eine Auswerteschaltung (15) nachgeordnet ist, die nur bei vorgegebenen Betriebszuständen ein Signal aussendet.

6. Höhenverstellbare Anhängerkupplung nach mindestens einem der Ansprüche 1 bis 5, **dadurch gekennzeichnet, dass** der mindestens eine Sensor (7) und/oder der mindestens eine Verstärker (14, 16) mit mindestens einem Radiowellensender oder -dämpfer in Wirkverbindung steht.

7. Höhenverstellbare Anhängerkupplung nach mindestens einem der Ansprüche 1 bis 6, **dadurch gekennzeichnet, dass** das mindestens eine Anzeigegerät (21) nahe einem Fahrersitz angeordnet ist.

8. Höhenverstellbare Anhängerkupplung nach mindestens einem der Ansprüche 1 bis 7, **dadurch gekennzeichnet, dass** der mindestens eine Sensor (7) im Bereich einer vertikalen Mittellinie (10) des Trägers (2) angeordnet ist.

## Claims

1. Height-adjustable trailer coupling for a vehicle, in particular for an agricultural tractor, wherein the trailer coupling (1) has a support (2) which is guided displaceably between guide rails, and the support (2) bears at least one coupling head (4) for the connection of a trailer, wherein, on the support (2), there is provided at least one sensor (7) which detects the deformation of said support during the occurrence of tensile and shear loads and which is operatively connected to at least one display unit (21),
**characterized in that**
the support (2) has ribs (9) which extend from the coupling head (4) to the guide rails, and
the at least one sensor (7) is arranged between the ribs (9) or on at least one of the ribs (9).

2. Height-adjustable trailer coupling according to Claim 1, **characterized in that** the at least one sensor (7) is a strain gauge (8).

3. Height-adjustable trailer coupling according to Claim 1 or 2, **characterized in that** at least two of the sensors (7) are connected to form a Wheatstone bridge.

4. Height-adjustable trailer coupling according to at least one of Claims 1 to 3, **characterized in that** the at least one sensor (7) is operatively connected to at least one amplifier (14, 16).

5. Height-adjustable trailer coupling according to at least one of Claims 1 to 4, **characterized in that,** downstream of the at least one sensor (7), there is connected at least one evaluation circuit (15) which outputs a signal only in the presence of predefined operating states.

6. Height-adjustable trailer coupling according to at least one of Claims 1 to 5, **characterized in that** the at least one sensor (7) and/or the at least one amplifier (14, 16) are/is operatively connected to at least one radio wave transmitter or attenuator.

7. Height-adjustable trailer coupling according to at least one of Claims 1 to 6, **characterized in that** the at least one display unit (21) is arranged close to a driver's seat.

8. Height-adjustable trailer coupling according to at least one of Claims 1 to 7, **characterized in that** the at least one sensor (7) is arranged in the region of a vertical centreline (10) of the support (2).

## Revendications

1. Attelage réglable en hauteur pour un véhicule, en particulier pour un tracteur agricole, dans lequel l'attelage (1) présente un support (2), qui est guidé de façon coulissante entre des rails de guidage, et le support (2) porte au moins une tête d'attelage (4) pour l'attelage d'une remorque, dans lequel il est prévu sur le support (2) au moins un capteur (7) détectant la déformation de celui-ci lors de l'application de charges de traction et de poussée, qui est en liaison active avec au moins un appareil d'affichage (21), **caractérisé en ce que** le support (2) présente des nervures (9), qui s'étendent de la tête d'attelage (4) aux rails de guidage et ledit au moins un capteur (7) est disposé entre les nervures (9) ou sur au moins une des nervures (9).

2. Attelage réglable en hauteur selon la revendication 1, **caractérisé en ce que** ledit au moins un capteur (7) est une jauge extensométrique.

3. Attelage réglable en hauteur selon la revendication 1 ou 2, **caractérisé en ce qu'**au moins deux capteurs (7) sont connectés en un pont de Wheatstone.

4. Attelage réglable en hauteur selon au moins une des revendications 1 à 3, **caractérisé en ce que** ledit au moins un capteur (7) est en liaison active avec au moins un amplificateur (14, 16).

5. Attelage réglable en hauteur selon au moins une des revendications 1 à 4, **caractérisé en ce qu'**au moins un circuit d'évaluation (15), qui n'émet un signal que dans des circonstances de fonctionnement prédéterminées, est disposé après ledit au moins un capteur (7).

6. Attelage réglable en hauteur selon au moins une des revendications 1 à 5, **caractérisé en ce que** ledit au moins un capteur (7) et/ou ledit au moins un amplificateur (14, 16) est en liaison active avec au moins un émetteur ou un atténuateur d'ondes radio.

7. Attelage réglable en hauteur selon au moins une des revendications 1 à 6, **caractérisé en ce que** ledit au moins un appareil d'affichage (21) est disposé à proximité d'un siège de conducteur.

8. Attelage réglable en hauteur selon au moins une des revendications 1 à 7, **caractérisé en ce que** ledit au moins un capteur (7) est disposé dans la région d'une ligne centrale verticale (10) du support (2).
